# EUROPÄISCHE PATENTSCHRIFT

(11) **EP 4 147 946 B1**
(45) Veröffentlichungstag und Bekanntmachung des Hinweises auf die Patenterteilung: **10.12.2025**
(21) Anmeldenummer: 22192356.8
(22) Anmeldetag: 26.08.2022
(51) Int. Cl.: B62D 5/04

(54) **LENKSYSTEM UND VERFAHREN ZUM BETREIBEN EINES LENKSYSTEMS FÜR EIN KRAFTFAHRZEUG**
STEERING SYSTEM AND METHOD FOR OPERATING A STEERING SYSTEM FOR A MOTOR VEHICLE
SYSTÈME DE DIRECTION ET PROCÉDÉ DE FONCTIONNEMENT D'UN SYSTÈME DE DIRECTION POUR UN VÉHICULE AUTOMOBILE

(30) Priorität: 10.09.2021 DE 102021210041
(43) Veröffentlichungstag der Anmeldung: 15.03.2023
(73) Patentinhaber: VOLKSWAGEN AG, 38440 Wolfsburg (DE)
(72) Erfinder: Heinrich, Felix, 38124 Braunschweig (DE); Willuhn, Dennis, 38518 Gifhorn (DE); Liesner, Henrik, 38550 Isenbüttel (DE)

(56) Entgegenhaltungen:
- DE-A1- 102008 040 202
- DE-A1- 102010 002 803
- DE-A1- 102019 124 320
- DE-A1- 102020 110 868
- DE-T5- 112018 006 236
- US-A1- 2016 221 601

## Beschreibung

Die Erfindung betrifft ein Lenksystem für ein Kraftfahrzeug sowie ein Verfahren zum Betreiben eines Lenksystems für ein Kraftfahrzeug.

Lenksysteme für Kraftfahrzeuge sind in verschiedenen Bauarten bekannt. Bei Steer-by-Wire-Lenksystemen und Überlagerungslenksystemen sind die Lenksäule und eine Zahnstange zur Auslenkung der Fahrzeugräder mechanisch entkoppelt. Um dem Kraftfahrzeugführer dennoch ein haptisches Feed-Back zu geben, sind bei derartigen Lenksystemen Aktoren an der Lenksäule vorgesehen, die ein Gegenmoment erzeugen, gegen das der Kraftfahrzeugführer mit seinem Handmoment lenken muss. Diese Aktoren sind meist als Elektromotoren ausgebildet, wobei ein Ritzel des Motors mit mindestens einem Zahnrad der Lenksäule in Eingriff ist, um ein Moment auf die Lenksäule und somit die Lenkhandhabe zu übertragen. Des Weiteren erzeugt der Aktor einen Software-Endanschlag, d.h. zu einem bestimmten Lenkraddrehwinkel erzeugt der Aktor ein maximales Gegenmoment von beispielsweise 36 Nm, das vom Kraftfahrzeugführer nicht überlenkt werden kann. Das Übersetzungsverhältnis zwischen Lenkraddrehwinkel und Zahnstangenposition ist dabei bei Steer-by-Wire-Systemen oder Überlagerungslenksystemen frei wählbar. Der Aktor wird auch als Force-Feedback-Aktor bezeichnet.

Derartige Aktoren an der Lenksäule kommen aber auch bei anderen Lenksystemen mit mechanischem Durchgriff zur Zahnstange zur Anwendung, um einen Software-Endanschlag zu erzeugen, um zu verhindern, dass in einen mechanischen Endanschlag gelenkt wird.

Ein Problem ist, dass auch der Aktor und die Lenksäule mit ihren in Eingriff stehenden Zahnrädern ein mechanisches System bilden, was Verschleiß unterworfen ist. Insbesondere die Position von Software-Endanschlag ist dabei kritisch, da dort die größten Drehmomente erzeugt werden. Eine optische Überwachung ist dabei schwierig.

Ein möglicher Ansatz ist eine Belastungszählung, also beispielsweise wie oft in den Software-Endanschlag gelenkt wurde. Nach einer vorbestimmten Anzahl von Lenkungen in den Software-Endanschlag kann dann der Aktor vorsorglich getauscht werden, was allerdings die Verfügbarkeit reduziert.

Aus der DE 10 2020 110 868 A1 ist ein solches Lenksystem für ein Kraftfahrzeug bekannt, umfassend eine Lenkhandhabe, eine Lenksäule, mindestens einen Aktor, der an der Lenksäule angeordnet ist, mindestens einen Drehwinkelsensor und ein Steuergerät, wobei der mindestens eine Aktor derart ausgebildet ist, an der Lenksäule ein Gegenmoment gegen ein Handmoment aus der Lenkhandhabe zu erzeugen, wobei die Lenkhandhabe eine Neutralstellung aufweist, in der kein Lenkwinkel an den Fahrzeugrädern erzeugt wird, wobei das Lenksystem derart ausgebildet ist, dass eine Belastungszählung erfolgt, wobei bei einer Überschreitung eines Schwellwertes durch den Belastungszähler der Fahrzeugbediener benachrichtigt wird.

Der Erfindung liegt das technische Problem zugrunde, ein Lenksystem mit einem Aktor an der Lenksäule zu schaffen, bei dem die Verfügbarkeit erhöht wird, sowie ein entsprechendes Verfahren zum Betreiben eines Lenksystems zur Verfügung zu stellen.

Die Lösung des technischen Problems ergibt sich durch ein Lenksystem mit den Merkmalen des Anspruchs 1 sowie ein Verfahren mit den Merkmalen des Anspruchs 7. Weitere vorteilhafte Ausgestaltungen der Erfindung ergeben sich aus den Unteransprüchen.

Das Lenksystem für ein Kraftfahrzeug umfasst eine Lenkhandhabe, eine Lenksäule, mindestens einen Aktor, der an der Lenksäule angeordnet ist, mindestens ein Drehwinkelsensor und ein Steuergerät, wobei der mindestens eine Aktor derart ausgebildet ist, an der Lenksäule ein Gegenmoment gegen ein Handmoment an der Lenkhandhabe zu erzeugen und einen Software-Endanschlag zu erzeugen. Weiter weist die Lenkhandhabe eine Neutralstellung auf, in der kein Lenkwinkel an den Fahrzeugrädern erzeugt wird. Das Lenksystem ist weiter derart ausgebildet, dass eine Belastungszählung für mindestens einen Software-Endanschlag und/oder die Neutralstellung erfolgt, wobei bei Überschreitung eines Schwellwerts für die Belastung der Software-Endanschlag und/oder die Neutralstellung verschoben wird. Anschaulich wird dadurch der Software-Endanschlag bzw. die ebenfalls stark belastete Neutralstellung auf ein anderes Zahn-Paar des Zahnrades bzw. Ritzels verschoben. Da dieses Zahn-Paar zuvor weniger stark belastet wurde, kann dann die Lenkung ohne Austausch von Aktor oder Lenksäule weiterbetrieben werden. Dabei kann die Verschiebung mehrfach wiederholt werden, wobei gegebenenfalls die Schwellwerte reduziert werden, da das neue Zahn-Paar zuvor auch einer Belastung ausgesetzt war. Dabei sei angemerkt, dass die Belastungszählung eine reine Zählung sein kann, es aber auch möglich ist, die einzelnen Belastungen auch zu wichten, beispielsweise wie schnell in den Endanschlag gelenkt wurde.

Dabei ist das Lenksystem als Steer-by-Wire-Lenksystem oder als Überlagerungslenksystem ausgebildet, da hier die Verschiebung des Software-Endanschlags keine Einbuße an Lenkwinkel an den Fahrzeugrädern hat. Bei Lenksystemen mit mechanischem Durchgriff kann der Software-Endanschlag nur zu kleineren Lenkraddrehwinkeln verschoben werden.

Für die Anpassung des Übersetzungsverhältnisses zwischen Lenkraddrehwinkel und Zahnstangenposition gibt es nun verschiedene Möglichkeiten.

In einer Ausführungsform ist das Lenksystem derart ausgebildet, dass der Software-Endanschlag um einen vorgegebenen Winkel Δφ erhöht wird, wobei das Übersetzungsverhältnis zwischen Lenkraddrehwinkel und Lenkwinkel bzw. Zahnstangenposition unverändert bleibt, wobei Lenkraddrehwinkel zwischen dem ursprünglichen Software-Endanschlag und dem neuen Software-Endanschlag keine Änderung des Lenkwinkels hervorrufen.

In einer alternativen Ausführungsform ist das Lenksystem derart ausgebildet, das Übersetzungsverhältnis zwischen Lenkraddrehwinkel und Lenkwinkel mit einem Faktor zu strecken, sodass der maximale Lenkwinkel mit dem neuen Software-Endanschlag korrespondiert. Dabei wird das Lenkverhalten über den gesamten Lenkraddrehwinkelbereich leicht verändert, wobei jedoch ein Offset vermieden wird, bei dem eine Lenkraddrehung keine Lenkwinkeländerung mehr zur Folge hat.

In einer weiteren alternativen Ausführungsform ist das Lenksystem derart ausgebildet, dass die ursprüngliche Übersetzung zwischen einem Lenkraddrehwinkel und einem Lenkwinkel bis zu einem vorgegebenen Lenkraddrehwinkel, der kleiner als der ursprüngliche Software-Endanschlag ist, beibehalten wird, wobei zwischen dem vorgegebenen Lenkraddrehwinkel und dem neuen Software-Endanschlag das Übersetzungsverhältnis durch eine Kennlinie gegeben ist, wobei der maximale Lenkwinkel mit dem neuen Software-Endanschlag korrespondiert. Dabei kann weiter vorgesehen sein, dass der Nutzer aus einer Anzahl von Kennlinien sich eine vorab auswählen kann.

In einer weiteren Ausführungsform ist die Lenkhandhabe rotationssymmetrisch, wobei die Verschiebung der Neutralstellung entsprechend der Rotationssymmetrie erfolgt, sodass optisch die Verschiebung nicht bemerkt wird.

Dabei kann in einer weiteren Ausführungsform vorgesehen sein, dass die Lenkhandhabe eine Anzeigeeinheit aufweist. Dabei ist das Lenksystem derart ausgebildet, dass die Anzeigeeinheit entgegen der Verschiebung der Neutralstellung gedreht wird oder dass die Anzeigeeinheit feststehend ist, wobei eine Darstellung auf der Anzeigeeinheit entgegen der Verdrehung der Neutralstellung gedreht wird.

Das Verfahren zum Betreiben eines Lenksystems für ein Kraftfahrzeug erfolgt mittels einer Lenkhandhabe, einer Lenksäule, mindestens einem Aktor, der an der Lenksäule angeordnet ist, mindestens einem Drehwinkelsensor und eines Steuergerätes, wobei der mindestens eine Aktor an der Lenksäule ein Gegenmoment gegen ein Handmoment an der Lenkhandhabe erzeugt und einen Software-Endanschlag erzeugt, wobei die Lenkhandhabe eine Neutralstellung aufweist, in der kein Lenkwinkel an den Fahrzeugrädern erzeugt wird, wobei eine Belastungszählung für mindestens einen Software-Endanschlag und/oder die Neutralstellung erfolgt, wobei bei Überschreitung eines Schwellwertes für die Belastung der Software-Endanschlag und/oder die Neutralstellung verschoben wird.

Hinsichtlich der weiteren Ausgestaltung wird vollinhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: eine schematische Teildarstellung eines Lenksystems,
- Fig. 2: eine erste Darstellung eines Lenkwinkels bzw. einer Zahnstangenposition über dem Lenkraddrehwinkel,
- Fig. 3: eine zweite Darstellung eines Lenkwinkels bzw. einer Zahnstangenposition über dem Lenkraddrehwinkel,
- Fig. 4: eine dritte Darstellung eines Lenkwinkels bzw. einer Zahnstangenposition über dem Lenkraddrehwinkel,
- Fig. 5: eine vierte Darstellung eines Lenkwinkels bzw. einer Zahnstangenposition über dem Lenkraddrehwinkel und
- Fig. 6: eine schematische Darstellung einer rotationssymmetrischen Lenkhandhabe.

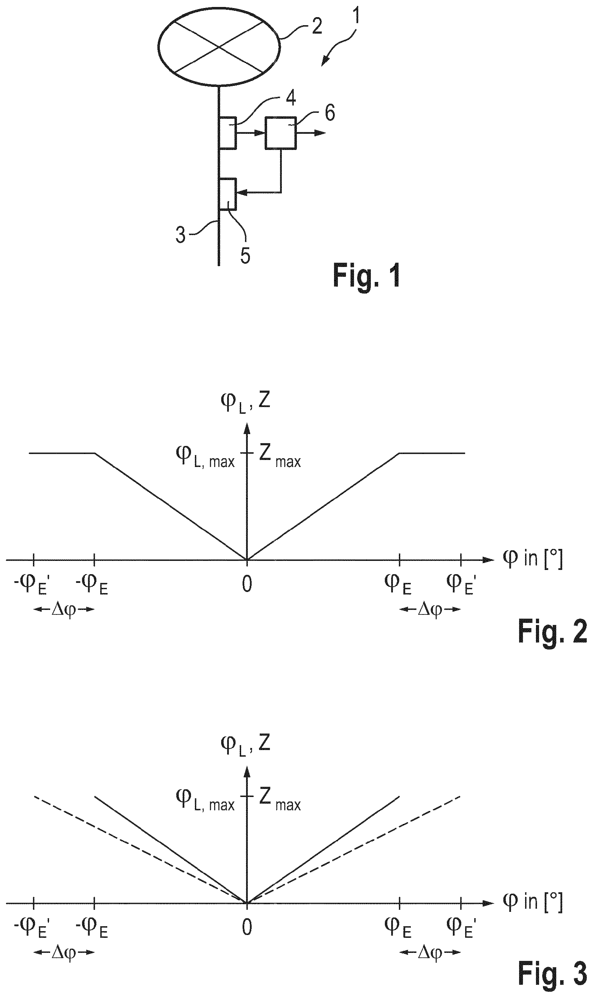

In der Fig. 1 ist schematisch eine Teildarstellung eines Lenksystems 1 dargestellt, das eine Lenkhandhabe 2, eine Lenksäule 3, einen Drehwinkelsensor 4, einen Aktor 5 und ein Steuergerät 6 aufweist. Die Lenkhandhabe 2 ist mit der Lenksäule 3 verbunden. An der Lenksäule 3 ist der Drehwinkelsensor 4 angeordnet, der einen Lenkraddrehwinkel φ erfasst.

Weiter ist an der Lenksäule 3 ein Aktor 5 angeordnet, der als Elektromotor ausgebildet ist und ein Gegenmoment gegen ein Handmoment an der Lenkhandhabe 2 in Abhängigkeit von dem Lenkraddrehwinkel φ erzeugt. Weiter erzeugt der Aktor 5 auch einen Software-Endanschlag φ_{E} (siehe Fig. 2) je Drehrichtung, wobei der Aktor 5 im Software-Endanschlag mit maximalem Moment gegen eine Drehung an der Lenkhandhabe 2 arbeitet. Der Aktor 5 ist über ein Ritzel mit einem Zahnrad oder einem Ritzel der Lenksäule 3 in Eingriff, um die Momente zu übertragen. Der Aktor 5 wird von dem Steuergerät 6 angesteuert, wobei das Steuergerät 6 zusätzlich noch Signale an ein nicht dargestelltes Steuergerät eines Lenkgetriebes übermittelt, das dann eine Position einer Zahnstange ändert, um einen Lenkwinkel φ_{L} an den Fahrzeugrädern einzustellen. In dem Steuergerät 6 ist ein Belastungszähler integriert, der erfasst, wie oft in einen Software-Endanschlag und in eine Neutralstellung gelenkt wurde. Dabei ist den Software-Endanschlägen und der Neutralstellung jeweils ein Schwellwert für die Belastung zugeordnet. Überschreitet dann die Belastung für den Software-Endanschlag φ_{E} einen Schwellwert, so wird der Software-Endanschlag um einen vorbestimmten Winkel Δφ verschoben, sodass sich ein neuer Software-Endanschlag φ_{E}' einstellt (entsprechend φ_{E}' für die andere Drehrichtung), was in Fig. 2 dargestellt ist. Dabei wird das Übersetzungsverhältnis zwischen Lenkraddrehwinkel φ und dem Lenkwinkel φ_{L} bzw. der Zahnstangenposition Z bis zum alten Software-Endanschlag φ_{E} beibehalten, wobei Lenkraddrehwinkel φ zwischen φ_{E} und φ_{E}' keine Lenkwinkelveränderung bewirken (gleiches gilt dann beim Zurücklenken).

In der Fig. 3 ist eine alternative Ausführungsform dargestellt, bei der das ursprüngliche Übersetzungsverhältnis durch einen Faktor gestreckt wird, sodass der neue Software-Endanschlag φ_{E}' mit dem maximalen Lenkwinkel φ_{L,max} bzw. der maximalen Zahnstangenposition Zₘₐₓ korrespondiert.

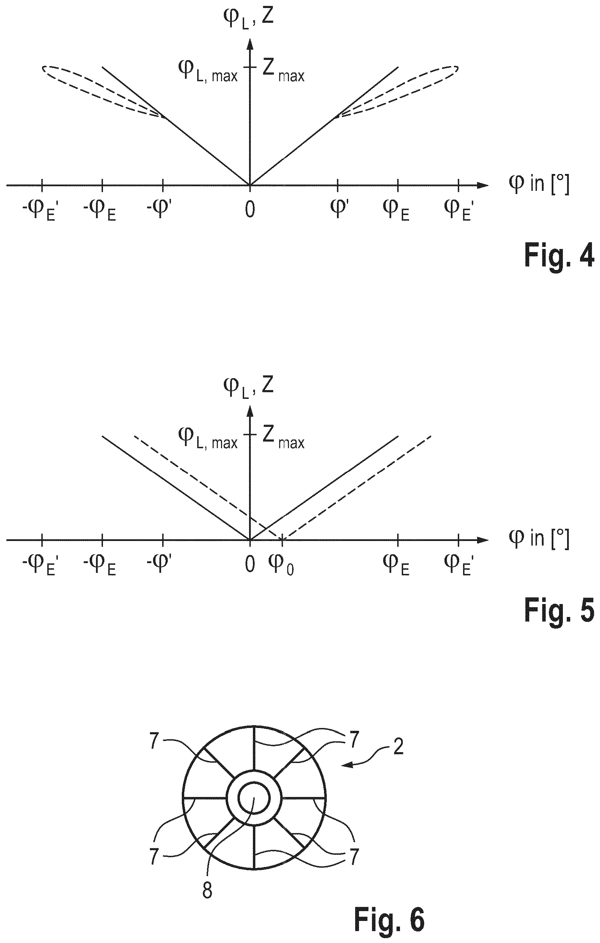

In der Fig. 4 ist eine weitere alternative Ausführungsform dargestellt, bei der die ursprüngliche Übersetzung zwischen dem Lenkraddrehwinkel und dem Lenkwinkel bis zu einem vorgegebenen Lenkraddrehwinkel φ' beibehalten wird, wobei zwischen dem vorgegebenen Lenkraddrehwinkel φ' und dem neuen Software-Endanschlag φ_{E}' das Übersetzungsverhältnis durch eine Kennlinie gegeben ist, wobei der maximale Lenkwinkel mit dem neuen Software-Endanschlag korrespondiert. Dabei sind verschiedene Kennlinien möglich, wobei diese nutzerindividuell auswählbar sind und in der Fig. 4 gestrichelt dargestellt sind.

Dabei sei angemerkt, dass das Übersetzungsverhältnis nicht wie dargestellt linear sein muss, sondern auch andere Verläufe aufweisen kann. Durch die lineare Darstellung sind jedoch die vorgenommenen Änderungen besser wahrnehmbar. Weiter sei angemerkt, dass Δφ vorzugsweise zwischen 5° bis 10° liegt.

In der Fig. 5 ist eine weitere alternative Ausführungsform dargestellt, bei der eine Neutralstellung um eine Winkel φ₀ verschoben wird, wenn die Belastung für die Neutralstellung einen Schwellwert überschritten hat, wobei die neue Übertragungskennlinie gestrichelt dargestellt ist.

In der Fig. 6 ist eine rotationssymmetrische Lenkhandhabe 2 dargestellt, die acht Speichen 7 aufweist, die jeweils 45° zueinander versetzt angeordnet sind. Mittig ist eine runde Anzeigeeinheit 8 angeordnet. Wird nun φ₀ aus Fig. 5 zu 45° gewählt, so wird die Verschiebung der Neutralstellung optisch nicht wahrgenommen. Die Darstellung auf der Anzeigeeinheit 8 muss dann nur um 45° gedreht dargestellt werden. Entsprechend wird bei einer solchen Lenkhandhabe der Winkel φ₀ zu 45° gewählt.

### Bezugszeichenliste

- 1: Lenksystem
- 2: Lenkhandhabe
- 3: Lenksäule
- 4: Drehwinkelsensor
- 5: Aktor
- 6: Steuergerät
- 7: Speicher
- 8: Anzeigeeinheit
- φ: Lenkraddrehwinkel
- φ_{L}: Lenkwinkel
- φ_{E}: Software-Endanschlag
- φ_{E}': neuer Software-Endanschlag
- Z: Zahnstangenposition

## Patentansprüche

1. Lenksystem (1) für ein Kraftfahrzeug, wobei das Lenksystem (1) als Steer-by-Wire-Lenksystem oder als Überlagerungslenksystem ausgebildet ist, umfassend eine Lenkhandhabe (2), eine Lenksäule (3), mindestens einen Aktor (5), der an der Lenksäule (3) angeordnet ist, mindestens einen Drehwinkelsensor (4) und ein Steuergerät (6), wobei der mindestens eine Aktor (5) derart ausgebildet ist, an der Lenksäule (3) ein Gegenmoment gegen ein Handmoment aus der Lenkhandhabe (2) zu erzeugen und einen Software-Endanschlag (φ_{E}, φ_{E}) zu erzeugen, wobei die Lenkhandhabe (2) eine Neutralstellung aufweist, in der kein Lenkwinkel (φ_{L}) an den Fahrzeugrädern erzeugt wird, wobei in dem Steuergerät (6) ein Belastungszähler integriert ist, der eine Belastungszählung durchführt, wobei die Belastungszählung eine reine Zählung ist oder einzelne Belastungen zusätzlich gewichtet werden, wobei das Lenksystem (1) derart ausgebildet ist, dass die Belastungszählung für mindestens einen Software-Endanschlag (φ_{E}, φ_{E}) und/oder die Neutralstellung erfolgt, wobei bei Überschreitung eines Schwellwertes für die Belastung der Software-Endanschlag (φ_{E}, φ_{E}) und/oder die Neutralstellung verschoben wird.

2. Lenksystem nach Anspruch 1, **dadurch gekennzeichnet, dass** das Lenksystem (1) derart ausgebildet ist, dass der Software-Endanschlag (φ_{E}, φ_{E}) um einen vorgegebenen Winkel (Δφ) erhöht wird, wobei das Übersetzungsverhältnis zwischen Lenkraddrehwinkel (φ) und Lenkwinkel (φ_{L} unverändert bleibt, wobei Lenkraddrehwinkel (φ) zwischen dem ursprünglichen Software-Endanschlag (φ_{E}, φ_{E}) und dem neuen Software-Endanschlag (φ_{E}', -φ_{E}') keine Änderung des Lenkwinkels (φ_{L}) hervorrufen.

3. Lenksystem nach Anspruch 1, **dadurch gekennzeichnet, dass** das Lenksystem (1) derart ausgebildet ist, das Übersetzungsverhältnis zwischen Lenkraddrehwinkel (φ) und Lenkwinkel (φ_{L}) mit einem Faktor zu strecken, sodass der maximale Lenkwinkel (φ_{L,max}) mit dem neuen Software-Endanschlag (φ_{E}', -φ_{E}') korrespondiert.

4. Lenksystem nach Anspruch 1, **dadurch gekennzeichnet, dass** das Lenksystem (1) derart ausgebildet ist, dass die ursprüngliche Übersetzung zwischen einem Lenkraddrehwinkel (φ) und einem Lenkwinkel (φ_{L}) bis zu einem vorgegebenen Lenkraddrehwinkel (φ', -φ'), der kleiner als der ursprüngliche Software-Endanschlag (φ_{E}, φ_{E}) ist, beibehalten wird, wobei zwischen dem vorgegebenen Lenkraddrehwinkel (φ', -φ') und dem neuen Software-Endanschlag (φ_{E}', -φ_{E}') das Übersetzungsverhältnis durch eine Kennlinie gegeben ist, wobei der maximale Lenkwinkel (φ_{L,max}) mit dem neuen Software-Endanschlag (φ_{E}', -φ_{E}') korrespondiert.

5. Lenksystem nach einem der vorangegangenen Ansprüche, **dadurch gekennzeichnet, dass** die Lenkhandhabe (2) rotationssymmetrisch ist, wobei die Verschiebung der Neutralstellung entsprechend der Rotationssymmetrie erfolgt.

6. Lenksystem nach einem der vorangegangenen Ansprüche, **dadurch gekennzeichnet, dass** die Lenkhandhabe (2) eine Anzeigeeinheit (8) aufweist, wobei das Lenksystem (1) derart ausgebildet ist, dass die Anzeigeeinheit (8) entgegen der Verschiebung der Neutralstellung gedreht wird, oder dass die Anzeigeeinheit (8) feststehend ist, eine Darstellung auf der Anzeigeeinheit (8) entgegen der Verschiebung der Neutralstellung gedreht wird.

7. Verfahren zum Betreiben eines Lenksystems (1) für ein Kraftfahrzeug, wobei das Lenksystem (1) als Steer-by-Wire-Lenksystem oder als Überlagerungslenksystem ausgebildet ist, mittels einer Lenkhandhabe (2), einer Lenksäule (3), mindestens einem Aktor (5), der an der Lenksäule (3) angeordnet ist, mindestens einem Drehwinkelsensor (4) und eines Steuergeräts (6), wobei der mindestens eine Aktor (5) an der Lenksäule (3) ein Gegenmoment gegen ein Handmoment an der Lenkhandhabe (2) erzeugt und einen Software-Endanschlag (φ_{E}, φ_{E}') erzeugt, wobei die Lenkhandhabe (2) eine Neutralstellung aufweist, in der kein Lenkwinkel (φ_{L}) an den Fahrzeugrädern erzeugt wird, wobei in dem Steuergerät (6) ein Belastungszähler integriert ist, der eine Belastungszählung durchführt, wobei die Belastungszählung eine reine Zählung ist oder einzelne Belastungen zusätzlich gewichtet werden, wobei die Belastungszählung für mindestens einen Software-Endanschlag (φ_{E}, φ_{E}) und/oder die Neutralstellung erfolgt, wobei bei Überschreitung eines Schwellwertes für die Belastung der Software-Endanschlag (φ_{E}, φ_{E}) und/oder die Neutralstellung verschoben wird.

8. Verfahren nach Anspruch 7, **dadurch gekennzeichnet, dass** der Software-Endanschlag (φ_{E}, φ_{E}) um einen vorgeschlagenen Winkel (Δφ) erhöht wird, wobei das Übersetzungsverhältnis zwischen Lenkraddrehwinkel (φ) und Lenkwinkel (φ_{L}) unverändert bleibt, wobei Lenkraddrehwinkel (φ) zwischen dem ursprünglichen Software-Endanschlag (φ_{E}, φ_{E}) und dem neuen Software-Endanschlag (φ_{E}', -φ_{E}') keine Änderung des Lenkwinkels (φ_{L} hervorrufen oder das Übersetzungsverhältnis zwischen Lenkraddrehwinkel (φ) und Lenkwinkel (φ_{L}) mit einem Faktor gestreckt wird, sodass der maximale Lenkwinkel (φ_{L,max}) mit dem neuen Software-Endanschlag (φ_{E}', -φ_{E}') korrespondiert
oder
die ursprüngliche Übersetzung zwischen einem Lenkraddrehwinkel (φ) und einem Lenkwinkel (φ_{L}) bis zu einem vorgegebenen Lenkraddrehwinkel (φ', -φ'), der kleiner als der ursprüngliche Software-Endanschlag (φ_{E}, φ_{E}) ist, beibehalten wird, wobei zwischen dem vorgegebenen Lenkraddrehwinkel (φ', -φ') und dem neuen Software-Endanschlag (φ_{E}', -φ_{E}') das Übersetzungsverhältnis durch eine Kennlinie gegeben ist, wobei der maximale Lenkwinkel (φ_{L,max}) mit dem neuen Software-Endanschlag (φ_{E}', -φ_{E}') korrespondiert.

9. Verfahren nach einem der Ansprüche 7 oder 8, **dadurch gekennzeichnet, dass** die Lenkhandhabe (2) rotationssymmetrisch ist, wobei die Verschiebung der Neutralstellung entsprechend der Rotationssymmetrie ist.

## Claims

1. Steering system (1) for a motor vehicle, wherein the steering system (1) is designed as a steer-by-wire steering system or as a superposition steering system, comprising a steering handle (2), a steering column (3), at least one actuator (5) arranged on the steering column (3), at least one rotation angle sensor (4) and a control unit (6), wherein the at least one actuator (5) is designed to generate, on the steering column (3), a counter-torque against a manual torque from the steering handle (2) and to generate a software end stop (φ_{E}, -φ_{E}), wherein the steering handle (2) has a neutral position in which no steering angle (φ_{L}) is generated at the vehicle wheels, wherein a load counter is integrated in the control unit (6) and carries out a load count, wherein the load count is a pure count or individual loads are additionally weighted, wherein the steering system (1) is designed such that the load count is carried out for at least one software end stop (φ_{E}, -φ_{E}) and/or the neutral position, wherein if a threshold value for the load is exceeded, the software end stop (φ_{E}, -φ_{E}) and/or the neutral position is shifted.

2. Steering system according to claim 1, **characterized in that** the steering system (1) is designed such that the software end stop (φ_{E}, -φ_{E}) is increased by a predetermined angle (Δφ), wherein the transmission ratio between the steering wheel rotation angle (φ) and the steering angle (φ_{L}) remains unchanged, wherein no change in the steering angle (φ_{L}) is brought about by the steering wheel rotation angle (φ) between the original software end stop (φ_{E}, -φ_{E}) and the new software end stop (φ_{E}', -φ_{E}').

3. Steering system according to claim 1, **characterized in that** the steering system (1) is designed to stretch the transmission ratio between the steering wheel rotation angle (φ) and the steering angle (φ_{L}) by a factor such that the maximum steering angle (φ_{L,max}) corresponds to the new software end stop (φ_{E}', -φ_{E}').

4. Steering system according to claim 1, **characterized in that** the steering system (1) is designed such that the original transmission between a steering wheel rotation angle (φ) and a steering angle (φ_{L}) is maintained up to a predetermined steering wheel rotation angle (φ', -φ') which is less than the original software end stop (φ_{E}, -φ_{E}), wherein between the predetermined steering wheel rotation angle (φ', -φ') and the new software end stop (φ_{E}', -φ_{E}'), the transmission ratio is given by a characteristic curve, wherein the maximum steering angle (φ_{L,max}) corresponds to the new software end stop (φ_{E}', -φ_{E}').

5. Steering system according to any of the preceding claims,
**characterized in that** the steering handle (2) is rotationally symmetrical, wherein the neutral position is shifted in accordance with the rotational symmetry.

6. Steering system according to any of the preceding claims,
**characterized in that** the steering handle (2) has a display unit (8), wherein the steering system (1) is designed such that the display unit (8) is rotated counter to the shifting of the neutral position, or such that the display unit (8) is fixed, a representation on the display unit (8) being rotated counter to the shifting of the neutral position.

7. Method for operating a steering system (1) for a motor vehicle, wherein the steering system (1) is designed as a steer-by-wire steering system or as a superposition steering system, by means of a steering handle (2), a steering column (3), at least one actuator (5) arranged on the steering column (3), at least one rotation angle sensor (4) and a control unit (6), wherein the at least one actuator (5) generates, on the steering column (3), a counter-torque against a manual torque on the steering handle (2) and generates a software end stop (φ_{E}, φ_{E}'), wherein the steering handle (2) has a neutral position in which no steering angle (φ_{L}) is generated at the vehicle wheels, wherein a load counter is integrated in the control unit (6) and carries out a load count, wherein the load count is a pure count or individual loads are additionally weighted, wherein the load count is carried out for at least one software end stop (φ_{E}, -φ_{E}) and/or the neutral position, wherein if a threshold value for the load is exceeded, the software end stop (φ_{E}, -φ_{E}) and/or the neutral position is shifted.

8. Method according to claim 7, **characterized in that** the software end stop (φ_{E}, -φ_{E}) is increased by a suggested angle (Δφ), wherein the transmission ratio between the steering wheel rotation angle (φ) and the steering angle (φ_{L}) remains unchanged, wherein no change in the steering angle (φ_{L}) is brought about by the steering wheel rotation angle (φ) between the original software end stop (φ_{E}, -φ_{E}) and the new software end stop (φ_{E}', -φ_{E}') or the transmission ratio between the steering wheel rotation angle (φ) and the steering angle (φ_{L}) is stretched by a factor such that the maximum steering angle (φ_{L,max}) corresponds to the new software end stop (φ_{E}', -φ_{E}')
or
the original transmission between a steering wheel rotation angle (φ) and a steering angle (φ_{L}) is maintained up to a predetermined steering wheel rotation angle (φ', -φ') which is less than the original software end stop (φ_{E}, -φ_{E}), wherein between the predetermined steering wheel rotation angle (φ', -φ') and the new software end stop (φ_{E}', -φ_{E}'), the transmission ratio is given by a characteristic curve, wherein the maximum steering angle (φ_{L,max}) corresponds to the new software end stop (φ_{E}', -φ_{E}').

9. Method according to either of claims 7 or 8, **characterized in that** the steering handle (2) is rotationally symmetrical, wherein the neutral position is shifted in accordance with the rotational symmetry.

## Revendications

1. Système de direction (1) pour un véhicule automobile, dans lequel le système de direction (1) est réalisé sous forme de système de direction à commande par câble électrique ou sous forme de système de direction à superposition, comprenant une manette de direction (2), une colonne de direction (3), au moins un actionneur (5) disposé sur la colonne de direction (3), au moins un capteur d'angle de rotation (4) et un appareil de commande (6), dans lequel l'au moins un actionneur (5) est configuré de sorte à générer, sur la colonne de direction (3), un couple antagoniste d'un couple manuel provenant de la manette de direction (2) et à générer une butée logicielle (φ_{E}, -φ_{E}), dans lequel la manette de direction (2) présente une position neutre dans laquelle aucun angle de direction (φ_{L}) n'est généré sur les roues de véhicule, dans lequel un compteur de charge est intégré dans l'appareil de commande (6), lequel compteur de charge met en œuvre un comptage de charge, dans lequel le comptage de charge est un comptage pur ou des charges individuelles sont pondérées additionnellement, dans lequel le système de direction (1) est configuré de sorte que le comptage de charge est effectué pour au moins une butée logicielle (φ_{E}, - φ_{E}) et/ou pour la position neutre, dans lequel la butée logicielle (φ_{E}, -φ_{E}) et/ou la position neutre sont coulissées en cas de dépassement d'une valeur seuil pour la charge.

2. Système de direction selon la revendication 1, **caractérisé en ce que** le système de direction (1) est configuré de sorte que la butée logicielle (φ_{E}, -φ_{E}) est augmentée d'un angle prédéterminé (Δφ), dans lequel le rapport de transmission entre l'angle de rotation de volant (φ) et l'angle de direction (φ_{L}) reste inchangé, dans lequel l'angle de rotation de volant (φ) entre la butée logicielle (φ_{E}, -φ_{E}) initiale et la nouvelle butée logicielle (φ_{E}',-φ_{E}') ne provoque pas de changement de l'angle de direction (φ_{L}).

3. Système de direction selon la revendication 1, **caractérisé en ce que** le système de direction (1) est configuré de sorte à étirer le rapport de transmission entre l'angle de rotation de volant (φ) et l'angle de direction (φ_{L}) avec un facteur de telle sorte que l'angle de direction maximal (φ_{L,max}) corresponde à la nouvelle butée logicielle (φ_{E}', -φ_{E}').

4. Système de direction selon la revendication 1, **caractérisé en ce que** le système de direction (1) est configuré de sorte que la transmission initiale entre un angle de rotation de volant (φ) et un angle de direction (φ_{L}) est maintenue jusqu'à ce qu'un angle de rotation de volant prédéterminé (φ', -φ') soit inférieur à la butée logicielle (φ_{E}, -φ_{E}) initiale, dans lequel le rapport de transmission est déterminé par une courbe caractéristique entre l'angle de rotation de volant prédéterminé (φ', -φ') et la nouvelle butée logicielle (φ_{E}', -φ_{E}'), dans lequel l'angle de direction maximal (φ_{L,max}) correspond à la nouvelle butée logicielle (φ_{E}', -φ_{E}').

5. Système de direction selon l'une des revendications précédentes, **caractérisé en ce que** la manette de direction (2) est à symétrie de révolution, dans lequel le coulissement de la position neutre est effectué d'une manière correspondant à la symétrie de révolution.

6. Système de direction selon l'une des revendications précédentes, **caractérisé en ce que** la manette de direction (2) présente une unité d'affichage (8), dans lequel le système de direction (1) est réalisé de sorte que l'unité d'affichage (8) est tournée dans le sens inverse du coulissement de la position neutre, **ou en ce que** l'unité d'affichage (8) est fixe, une représentation sur l'unité d'affichage (8) est tournée dans le sens inverse du coulissement de la position neutre.

7. Procédé permettant de faire fonctionner un système de direction (1) pour un véhicule automobile, dans lequel le système de direction (1) est réalisé sous forme de système de direction à commande par câble électrique ou sous forme de système de direction à superposition, au moyen d'une manette de direction (2), d'une colonne de direction (3), d'au moins un actionneur (5) disposé sur la colonne de direction (3), d'au moins un capteur d'angle de rotation (4) et d'un appareil de commande (6), dans lequel l'au moins un actionneur (5) génère, sur la colonne de direction (3), un couple antagoniste d'un couple manuel de la manette de direction (2) et génère une butée logicielle (φ_{E}, φ_{E}'), dans lequel la manette de direction (2) présente une position neutre dans laquelle aucun angle de direction (φ_{L}) n'est généré sur les roues de véhicule, dans lequel un compteur de charge est intégré dans l'appareil de commande (6), lequel compteur de charge met en œuvre un comptage de charge, dans lequel le comptage de charge est un comptage pur ou des charges individuelles sont pondérées additionnellement, dans lequel le comptage de charge est effectué pour au moins une butée logicielle (φ_{E}, -φ_{E}) et/ou pour la position neutre, dans lequel la butée logicielle (φ_{E}, -φ_{E}) et/ou la position neutre sont coulissées en cas de dépassement d'une valeur seuil pour la charge.

8. Procédé selon la revendication 7, **caractérisé en ce que** la butée logicielle (φ_{E}, -φ_{E}) est augmentée d'un angle proposé (Δφ), dans lequel le rapport de transmission entre l'angle de rotation de volant (φ) et l'angle de direction (φ_{L}) reste inchangé, dans lequel l'angle de rotation de volant (φ) entre la butée logicielle (φ_{E}, -φ_{E}) initiale et la nouvelle butée logicielle (φ_{E}', -φ_{E}') ne provoque pas de changement de l'angle de direction (φ_{L}) ou le rapport de transmission entre l'angle de rotation de volant (φ) et l'angle de direction (φ_{L}) est étiré avec un facteur de telle sorte que l'angle de direction maximal (φ_{L,max}) corresponde à la nouvelle butée logicielle (φ_{E}', -φ_{E}')
ou
la transmission initiale entre un angle de rotation de volant (φ) et un angle de direction (φ_{L}) est maintenue jusqu'à ce qu'un angle de rotation de volant prédéterminé (φ', -φ') soit inférieur à la butée logicielle (φ_{E}, -φ_{E}) initiale, dans lequel le rapport de transmission est déterminé par une courbe caractéristique entre l'angle de rotation de volant prédéterminé (φ', -φ') et la nouvelle butée logicielle (φ_{E}', -φ_{E}'), dans lequel l'angle de direction maximal (φ_{L,max}) correspond à la nouvelle butée logicielle (φ_{E}', -φ_{E}').

9. Procédé selon l'une des revendications 7 ou 8, **caractérisé en ce que** la manette de direction (2) est à symétrie de révolution, dans lequel le coulissement de la position neutre correspond à la symétrie de révolution.
